Europäisches Patentamt

European Patent Office

Office européen des brevets

(11) Veröffentlichungsnummer: **0 049 822**
**B1**

(12)

# EUROPÄISCHE PATENTSCHRIFT

(45) Veröffentlichungstag der Patentschrift:
13.02.85

(51) Int. Cl.⁴: **H 04 J 15/00**

(21) Anmeldenummer: 81107783.3

(22) Anmeldetag: 30.09.81

(54) Optisches Wellenlängen-Multiplex-System.

(30) Priorität: 06.10.80 DE 3037712

(43) Veröffentlichungstag der Anmeldung:
21.04.82 Patentblatt 82/16

(45) Bekanntmachung des Hinweises auf die Patenterteilung:
13.02.85 Patentblatt 85/7

(84) Benannte Vertragsstaaten:
AT BE CH DE FR GB IT LI NL SE

(73) Patentinhaber: Siemens Aktiengesellschaft, Berlin und München Wittelsbacherplatz 2, D-8000 München 2 (DE)

(72) Erfinder: Winzer, Gerhard, Dr.-Ing.,
Günderodestrasse 16, D-8000 München 82 (DE)
Erfinder: Mahlein, Hans, Dr. Rer. Nat., Dipl.-Phys,
Queristrasse 2, D-8025 Unterhaching (DE)
Erfinder: Reichelt, Achim, Dipl.-Phys., Queristrasse 4,
D-8025 Unterhaching (DE)

(56) Entgegenhaltungen:
APPLIED OPTICS, Band 18, Nr. 8, April 1979, Seiten 1253-1258 New York, U.S.A. K. AOYAMA et al.: "Optical demultiplexer for a wavelenghth division multiplexing system"
ELECTRONICS LETTERS, Band 16, Nr. 3, Januar 1980, Seiten 108-109 London, G.B. R. WATANABE et al.: "Optical grating multiplexer in the 1.1-1.5 micro m wavelength region"
1979 INTERNATIONAL SYMPOSIUM ON CIRCUITS AND SYSTEMS, 17.-19. Juli 1979, IEEE, Seiten 735-738 New York, U.S.A. K. NOSU et al.: "A design of multiplexers for optical wavelength-division multiplexing transmission via a single fiber"
SOVIET JOURNAL OF QUANTUM ELECTRONICS, Band 8, Nr. 3, März 1978, Seiten 293-296 New York, U.S.A. A.M. ANDRIESH et al.: "Integrated-optical mixer in a thin-film

(56) Entgegenhaltungen: (Fortsetzung)
waveguide based on phase diffraction gratings, designed for multichannel optical communication lines"
NTC 1980 NATIONAL TELECOMMUNICATIONS CONFERENCE, Band 2, Houston, 30. November - 4. Dezember 1980, IEEE, Seiten 34.1.1 bis 34.1.6 New York, U.S.A. K. NOSU et al.: "A design on two-way wavelength-division-multiplexing transmission for fiber optic subscriber loops"
IEEE JOURNAL OF QUANTUM ELECTRONICS, Band QE-17, Nr. 6, Juni 1981, Seiten 974-981 New York, U.S.A. R. WATANABE et al.: "Optical multi/demultiplexers for singlemode fiber transmission"

**Beschreibung**

Die Erfindung betrifft ein optisches Wellenlängen-Multiplex-System.

Für die optische Nachrichtenübertragung im Wellenlängen-Multiplex, bei der die modulierte Strahlung mehrerer Lichtquellen verschiedener Wellenlänge, von denen jede unterschiedliche Information überträgt, gleichzeitig über eine einzige Glasfaser gesandt wird, benötigt man optische Multiplexer und Demultiplexer.

Je nach der Art der verwendeten Lichtquellen (Lumineszenzdioden oder Laserdioden), der Anzahl der zu übertragenden Wellenlängenkanäle und ihrem Kanalabstand, werden bisher Interferenzfilter- oder Gitteranordnungen zur Realisierung von Multi-/Demultiplexern verwendet. Im Falle weniger Kanäle und mit Lumineszenzdioden als Sendern, sind Interferenzfilteranordnungen vorzuziehen, da sie günstige Werte für den Einfügeverlust und die Nebensprechdämpfung liefern und gemäß dem Strahlteilerprinzip einfach und kompakt aufgebaut werden können (A. Reichelt, H. F. Mahlein und G. Winzer: »Low Loss Lensless Wavelength-Division Multiplexer«, Conf. on Optical Communication, York, 1980; K. Nosu et al.: »A design of multiplexers for optical wavelenght-division multiplexing transmission via a single fiber« 1979 International Symposium on circuits and systems, 17.—19. Juli 1979, IEEE, Seiten 735 bis 738). Eine Interferenzfilter-Anordnung als Multiplexer oder als Demultiplexer mit acht Kanälen wäre nur noch mit sehr großem Aufwand zu realisieren. Allein aufgrund der Linienbreite der Lumineszenzdioden wären in dem zur optischen Nachrichtenübertragung über Lichtleitfasern verfügbaren Wellenlängenbereich von 700 nm bis 1,6 µm bestenfalls sieben Kanäle zu verwirklichen.

Für die Realisierung vieler Wellenlängenkanäle müssen Laserdioden in Verbindung mit einem Reflexionsgitter verwendet werden. Multiplex- bzw. Demultiplex-Bausteine mit einer Reflexionsgitteranordnung für Laserdioden wurden inzwischen mit zehn Kanälen realisiert. Sinnvolle Kanalabstände sind hier im Bereich um $\lambda=800$ nm etwa $\Delta\lambda=20$ nm und um $\lambda=1,3$ µm etwa 35 nm (K. Kobayashi und M. Seki: »Microoptic Grating Multiplexers and Optical Isolators for Fiber-Optic Communications«, IEEE Journ. Quant. Electronics, QE—16/1 (1980), 11—22; K. Aoyama et al.: »Optical demultiplexer for a wavelenght division multiplexing system«, Applied Optics, Band 18, Nr. 8, April 1979, Seiten 1253 bis 1258). Als obere Grenze für die Kanalzahl ergäbe sich daraus ein Wert von etwa 30. Diese Zahl setzt aber voraus, daß über den gesamten verfügbaren Wellenlängenbereich verteilt, gleichwertige Laserdioden zur Verfügung stehen. Der Aufbau von Multiplex- bzw. Demultiplex-Bausteinen mit einem einzigen Reflexionsgitter erscheint für die abgeschätzte Kanalzahl als ein technologisch außerordentlich anspruchsvolles Vorhaben. Realistischer ist für diese Variante von Multiplex- bzw. Demultiplex-Bausteinen die Annahme, unter der Angabe »viele Wellenlängenkanäle« eine Anzahl von etwa fünfzehn zu verstehen. Werden Reflexionsgitter-Multiplex- bzw. -Demultiplex-Bausteine für mehr als acht Kanäle verwendet, so treten starke Schwankungen der Einfügeverluste wegen der Wellenlängenabhängigkeit des Beugungswirkungsgrades (Blazewinkel) und große Einfügeverluste für die Fasern mit großem Abstand von der optischen Achse infolge von Abbildungsfehlern auf.

Der Erfindung liegt die Aufgabe zugrunde, ein optisches Wellenlängen-Multiplex-System anzugeben, mit dem die Anzahl der Übertragungskanäle mit verschiedenen Trägerwellenlängen im Vergleich zu bekannten Lösungen vergrößert werden kann.

Diese Aufgabe wird erfindungsgemäß dadurch gelöst, daß die Multiplexer bzw. Demultiplexer zur Vergrößerung der Kanalanzahl sowohl mit Reflexionsgittern als auch mit Interferenzfiltern versehen sind, wobei die Reflexionsgitter- und Interferenzfilter-Multiplex- bzw. -Demultiplex-Bausteine zueinander angepaßt sind. Damit ist eine Vergrößerung der Kanalanzahl möglich, ohne gleichzeitig die Einfügeverluste untragbar anwachsen zu lassen.

In einer Ausbildung der Erfindung ist mittels der Interferenzfilter-Multiplex- bzw. -Demultiplex-Bausteine die Einzelfaser an beiden Enden der Übertragungsstrecke baumförmig aufgefächert, wobei die sich ergebenden Fasertore durch Reflexionsgitter-Multiplex- bzw. -Demultiplex-Bausteine weiter vervielfacht sind.

Zweckmäßig ist es, daß die Ausgangsfasern der Reflexionsgitter-Multiplexer, die Fasern von Interferenzfilter-Multiplexer, Interferenzfilter-Demultiplexer sowie die Eingangsfasern der Reflexionsgitter-Demultiplexer mit dem Systemfasertyp der Übertragungsstrecke identisch sind (Brechzahlprofil, numerische Apertur und Kerndurchmesser).

Die Eingangsfasern zum Reflexionsgitter-Multiplexer werden dagegen im allgemeinen mit kleinerem Kerndurchmesser und/oder kleinerer numerischer Apertur gewählt, während beim Reflexionsgitter-Demultiplexer für die Ausgangsfasern größere Kerndurchmesser und eine größere numerische Apertur zweckmäßig sind.

Vorteilhaft bei der gewählten Anordnung ist, daß der Wellenlängenabstand zwischen zwei Wellenlängenbändern, die über zwei Reflexionsgitter und über dasselbe Interferenz-Kantenfilter an die Einzelfaser der Übertragungsstrecke gekoppelt sind, beliebig gewählt werden kann, solange die Kantensteilheit des Interferenz-Kantenfilters dies zuläßt.

Ausführungsbeispiele der Erfindung sind in der Zeichnung dargestellt und werden im folgenden näher beschrieben:

Fig. 1 zeigt ein erfindungsgemäßes optisches Wellenlängen-Multiplex-System mit Reflexionsgitter und Kanteninterferenzfilter (2 N Kanäle).

Fig. 2 zeigt ein zu der Anordnung von Fig. 1 ähnliches optisches Wellenlängen-Multiplex-System, jedoch für 4 N Kanäle (N ist jeweils Element der natürlichen Zahlen).

Eine Vergrößerung der Kanalanzahl bei einem optischen Wellenlängen-Multiplex-System ist dadurch möglich, daß ein solches Multiplex-System mit zueinander angepaßten Reflexionsgitter- und Interferenzfilter-Multiplex- bzw. -Demultiplex-Bausteinen aufgebaut wird. Dabei dienen die Interferenzfilter-Multiplex- bzw. -Demultiplex-Bausteine zu einer baumförmigen Auffächerung der Einzelfaser der Übertragungsstrecke an beiden Enden der Übertragungsstrecke, so daß zunächst zwei bzw. vier Fasertore auf jeder Seite der Übertragungsstrecke zur Verfügung stehen. Diese Fasertore werden durch Reflexionsgitter-Multiplex- bzw. -Demultiplex-Bausteine weiter vervielfacht.

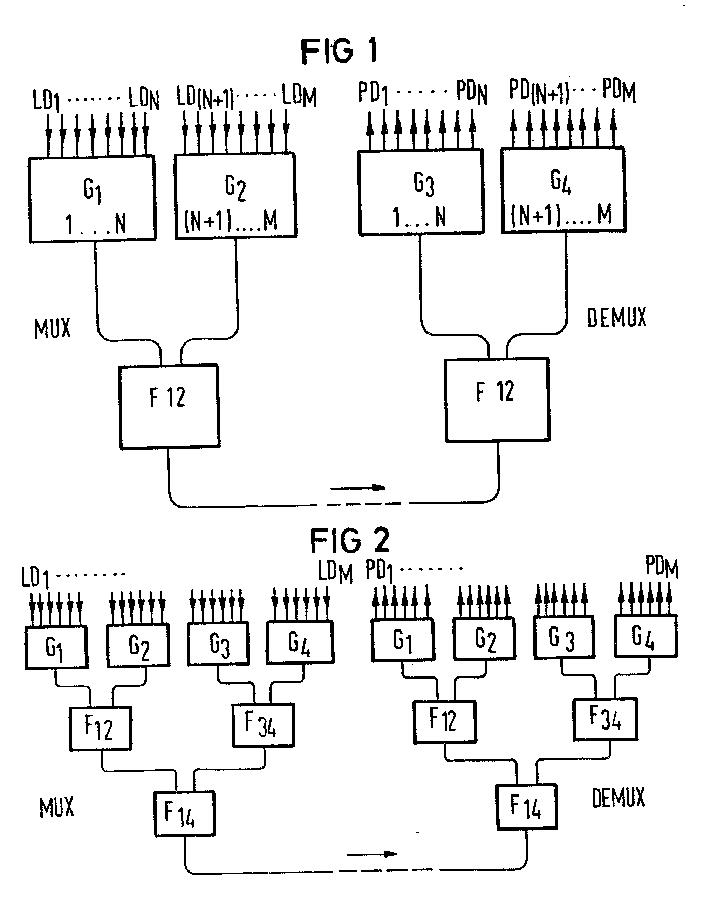

Fig. 1 zeigt die hier vorgeschlagene Anordnung mit zunächst einer Filterstufe (je zwei Fasertore) und Fig. 2 zeigt eine entsprechende Anordnung mit je vier Fasertoren. In Fig. 1 bedeuten LD die mit verschiedenen Wellenlängen spektral gestaffelt emittierenden Laserdioden und PD die Empfangsdioden, $G_1$ und $G_2$ die für zwei Wellenlängenbänder unterschiedlich geblazten Reflexionsgitter in den Reflexionsgitter-Multiplex- bzw. -Demultiplex-Bausteinen und $F_{12}$ das Interferenz-Kantenfilter in den Interferenz-Multiplex- bzw. -Demultiplex-Bausteinen. Die Kanäle 1 bis N (N + 1) bis M führen jeweils Licht benachbarter Wellenlängen, z. B. im Band I das Licht der Laserdioden mit beispielsweise den Emissionswellenlängen

$$\lambda_1 = 750 \text{ nm}$$
$$\lambda_2 = 780 \text{ nm}$$
$$\lambda_3 = 810 \text{ nm}$$
$$\lambda_4 = 840 \text{ nm}$$
$$\lambda_5 = 870 \text{ nm}$$
$$\lambda_6 = 900 \text{ nm.}$$

Der Wellenlängenabstand (Kanalabstand) beträgt bei diesem Beispiel $\Delta\lambda = 30$ nm. Für gegebene Faserparameter sind die Dimensionierungsvorschriften für einen Reflexionsgitter-Multiplex- bzw. -Demultiplex-Baustein bekannt, vergleiche z. B. die zitierte Veröffentlichung von K. Kobayashi und M. Seki. Mit der Mittenwellenlänge $\lambda_{BI}$ und der Gitterkonstante $d_I$ folgt der Blazewinkel $\vartheta_I$ aus

$$\sin \vartheta_I = \lambda_{BI}/2 \, d_I.$$

Für die Mittenwellenlänge ist

$$\lambda_{BI} \approx (\lambda_1 + \lambda_6)/2$$

zu wählen. Im Wellenlängenband II kann z. B. bei einem größeren Kanalabstand $\Delta\lambda = 40$ nm das Licht von Laserdioden mit beispielsweise den Emissionswellenlängen

$$\lambda_7 = 1220 \text{ nm}$$

$$\lambda_8 = 1260 \text{ nm}$$
$$\lambda_9 = 1300 \text{ nm}$$
$$\lambda_{10} = 1340 \text{ nm}$$
$$\lambda_{11} = 1380 \text{ nm}$$
$$\lambda_{12} = 1420 \text{ nm}$$

mit dem zweiten Reflexionsgitter-Multiplex-bzw. -Demultiplex-Baustein zusammengefaßt werden. Der Blazewinkel $\vartheta_2$ oder die Gitterkonstante $d_{II}$ ist bei dem Gitter $G_2$ mit

$$\lambda_{BII} \approx (\lambda_7 + \lambda_{12})/2$$

festgelegt. Das Licht in den Ausgangsfasern beider Reflexionsgitter-Multiplexer wird mit dem Interferenz-Multiplex-Baustein zusammengefaßt. Die Kante des Interferenz-Kantenfilters $F_{12}$ wird bei dem gewählten Beispiel mit M = 12 in die Wellenlängen-Mitte, d. h. auf

$$\lambda_K \approx (\lambda_6 + \lambda_7)/2$$

gelegt. Von dem Interferenzfilter-Multiplexer wird bei einem long-wave-pass-Filter das Licht der Kanäle 1 bis N über den Reflexionskanal und das der Kanäle (N + 1) bis M über den Transmissionskanal eingekoppelt. Die Kanäle sind zu vertauschen, wenn der Interferenzfilter-Multiplexer mit einem short-wave-pass-Filter realisiert wird. Der Aufbau von Interferenzfilter-Demultiplexern und Reflexionsgitter-Demultiplexern ist ganz analog.

Mit dem Multiplex-System nach Fig. 2 wird das Licht von vier Kanalgruppen mit jeweils gleicher oder annähernd gleicher Kanalzahl M/4 über eine Einzelfaserstrecke übertragen. Mit dieser Anordnung ließe sich bei je sieben Kanälen unter Verwendung von vier unterschiedlichen Reflexionsgittern $G_1$ bis $G_4$ und drei verschiedenen Kantenfiltern $F_{12}$, $F_{34}$, $F_{14}$ möglicherweise sogar eine Kanalzahl M dicht an der Grenze des im verfügbaren Wellenlängenbereich überhaupt Erreichbaren verifizieren. Die Kantenfilter werden hinsichtlich ihrer spektralen Lage dann z. B. so gestaffelt, daß $\lambda_K(F_{14})$ in der Mitte zwischen $\lambda_K(F_{12})$ und $\lambda_K(F_{34})$ liegt.

Die Einfügedämpfungen $a_{sF}$ von Interferenzfilter-Multiplex- bzw. -Demultiplex-Bausteinen (sie enthalten hier nur Kantenfilter und keine zusätzlichen Schmalbandfilter) liegen unter 2 dB. Bei den Reflexionsgitter-Multiplex- bzw. -Demultiplex-Bausteinen kann ebenfalls mit Einfügedämpfungen $a_{sG} \approx 2$ dB gerechnet werden, da die Kanalanzahl der Einzelgitter niedrig bleibt. Beim Durchlaufen der Elemente des ersten Systems (Fig. 1) ergeben sich für das Multiplexen und Demultiplexen insgesamt Zusatzverluste

$$a_s = 2 \, a_{sG} + 2 \, a_{sF} \approx 8 \text{ dB}$$

und beim Durchlaufen der Elemente des zweiten Systems (Fig. 2) Zusatzverluste

$$a_s = 2 \, a_{sG} + 4 \, a_{sF} \approx 12 \text{ dB.}$$

Beim Vergleich mit Systemen, die ausschließlich Reflexionsgitter-Multiplex- bzw. -Demultiplex-Bausteine verwenden, ist zu beachten, daß mit den vorgeschlagenen Anordnungen hier mehr Kanäle realisiert werden können, damit die Übertragungskapazität der Faserstrecke besser ausgenutzt werden kann.

Einzelheiten über Interferenz-Filter, wie sie bei einer erfindungsgemäßen Anordnung verwendet werden können, sind bei H. F. Mahlein: »Designing of Edge Interference Filters for Wavelength-Division Multiplex Transmission over Multimode Optical Fibers«, Siemens Forsch.- und Entw. Ber. 9 (1980), 142—150, zu finden.

## Patentansprüche

1. Optisches Wellenlängen-Multiplex-System mit Multiplexern und Demultiplexern, dadurch gekennzeichnet, daß die Multiplexer bzw. Demultiplexer zur Vergrößerung der Kanalanzahl sowohl mit Reflexionsgittern ($G_1 - G_4$) als auch mit Interferenzfiltern ($F_{12}$; $F_{12}$, $F_{14}$, $F_{34}$) versehen sind, wobei die Reflexionsgitter- und Interferenzfilter-Multiplex- bzw. -Demultiplex-Bausteine zueinander angepaßt sind.

2. Optisches Wellenlängen-Multiplex-System nach Anspruch 1, dadurch gekennzeichnet, daß mittels der Interferenzfilter-Multiplex- bzw. -Demultiplex-Bausteine die Einzelfaser der Übertragungsstrecke an beiden Enden der Übertragungsstrecke aufgefächert ist, wobei die sich ergebenden Fasertore durch Reflexionsgitter-Multiplex- bzw. -Demultiplex-Bausteine weiter vervielfacht sind.

3. Optisches Wellenlängen-Multiplex-System nach einem der Ansprüche 1 oder 2, dadurch gekennzeichnet, daß die Ausgangsfasern der Reflexionsgitter-Multiplexer, die Fasern von Interferenzfilter-Multiplexer, Interferenzfilter-Demultiplexer sowie die Eingangsfasern der Reflexionsgitter-Demultiplexer mit dem Systemfasertyp der Übertragungsstrecke identisch sind (Brechzahlprofil, numerische Apertur und Kerndurchmesser).

4. Optisches Wellenlängen-Multiplex-System nach einem der Ansprüche 1 bis 3, dadurch gekennzeichnet, daß die Eingangsfasern zum Reflexionsgitter-Multiplexer einen kleineren Kerndurchmesser und/oder eine kleinere numerische Apertur und die Ausgangsfasern beim Reflexionsgitter-Demultiplexer einen größeren Kerndurchmesser und eine größere numerische Apertur aufweisen als die übrigen verwendeten Fasern.

5. Optisches Wellenlängen-Multiplex-System nach einem der Ansprüche 1 bis 4, dadurch gekennzeichnet, daß als Interferenzfilter Interferenz-Kantenfilter mit großer Kantensteilheit verwendet werden.

6. Optisches Wellenlängen-Multiplex-System mit Multiplexern und Demultiplexern nach Anspruch 1, dadurch gekennzeichnet, daß die Multiplexer bzw. Demultiplexer jeweils mit mindestens einem Interferenzfilter ($F_{12}$; $F_{12}$, $F_{14}$, $F_{34}$) und mit mindestens zwei Reflexionsgittern ($G_1$ bis $G_4$) versehen sind.

## Claims

1. An optical wave-lenght multiplex system with multiplexers and demultiplexers, characterised in that in order to increase the number of channels the multiplexers and demultiplexers are provided both with reflection grids ($G_1 - G_4$) and with interference filters ($F_{12}$; $F_{12}$, $F_{14}$, $F_{34}$), where the reflection grid-module and interference filter-multiplex-module or demultiplex-module, as the case may be, are matched to one another.

2. An optical wave-length multiplex system as claimed in Claim 1, characterised in that by means of the interference filtermultiplex and demultiplex-modules the individual fibre of the transmission link is fanned at both ends of the transmission link, where the resultant fibre ports are further multiplied by means of reflection grid-multiplex and demultiplex-modules.

3. An optical wave-length multiplex system as claimed in one of Claims 1 or 2, characterised in that the output fibres of the reflection grid-multiplexers, the fibres of interference filter-multiplexers and interference filter-demultiplexers, and the input fibres of the reflection grid-demultiplexers are identical to the system fibre type of the transmission link (index of refraction profile, numerical aperture and core diameter).

4. An optical wave-length multiplex system as claimed in one of Claims 1 to 3, characterised in that the input fibres to the reflection grid-multiplexers possess a smaller core diameter and/or a smaller numerical aperture and the output fibres of the reflection grid-demultiplexer posses a larger core diameter and a larger numerical aperture than the other fibres which are used.

5. An optical wave-length multiplex system as claimed in one of Claims 1 to 4, characterised in that interference cut-on filters having a steep edge gradient are used as interference filters.

6. An optical wave-length multiplex system with multiplexers and demultiplexers as claimed in Claim 1, characterised in that the multiplexers and demultiplexers are each provided with at least one interference filter ($F_{12}$; $F_{12}$, $F_{14}$, $F_{34}$) and with at least two reflection grids ($G_1 - G_4$).

## Revendications

1. Système de multiplexage de longueurs d'ondes optiques comportant des multiplexeurs et des démultiplexeurs, caractérisé par le fait que, pour l'accroissement du nombre des canaux, les multiplexeurs ou les démultiplexeurs sont munis aussi bien de réseaux de réflexion ($G_1 - G_4$) que de filters interférentiels ($F_{12}$; $F_{12}$; $F_{14}$; $F_{34}$), les modules de multiplexage ou de démultiplexage à réseaux de réflexion et à filtres interférentiels étant adaptés les uns aux autres.

2. Système de multiplexage de longueurs d'ondes optiques, suivant la revendication 1, caractérisé par le fait qu'au moyen des modules de multiplexage ou de démultiplexage à filtres interférentiels, la fibre individuelle de la voie de transmission est étalée aux deux extrémités de la voie de transmission, les portes formées de fibres ainsi obtenues étant à nouveau multipliées par les modules de multiplexage ou de démultiplexage à réseaux de réflexion.

3. Système de multiplexage de longueurs d'onde optiques suivant l'une des revendications 1 ou 2, caractérisé par le fait que les fibres de sortie des multiplexeurs à réseaux de réflexion, les fibres de multiplexeurs à filtres interférentiels et de démultiplexeurs à filtres interférentiels ainsi que les fibres d'entrée des démultiplexeurs à réseaux de réflexion sont identiques au type de fibres du système de la voie de transmission (profil de l'indice de réfraction, ouverture numérique et diamètre du noyau).

4. Système de multiplexage de longueurs d'onde optiques selon l'une des revendications 1 à 3, caractérisé par le fait que les fibres d'entrée aboutissant au multiplexeur à réseaux de réflexion possèdent un diamètre de noyau plus faible et/ou une ouverture numérique plus faible et que les fibres de sortie dans le cas du démultipleur à réseaux de réflexion possèdent un diamètre du noyau plus important et une ouverture numérique plus grande que les autres fibres utilisées.

5. Système de multiplexage de longueurs d'onde optiques suivant l'une des revendications 1 à 4, caractérisé par le fait qu'on utilise comme filtre interférentiel un filtre interférentiel à limites de transmission, possédant une pente de limite élevée.

6. Système de multiplexage de longueurs d'onde optiques comportant des multiplexeurs et des démultiplexeurs suivant la revendication 1, caractérisé par le fait que les multiplexeurs ou les démultiplexeurs sont équipés respectivement d'au moins un filtre interférentiel ($F_{12}$; $F_{12}$, $F_{14}$, $F_{34}$) et d'au moins deux réseaux de réflexion ($G_1$ à $G_4$).

# FIG 1

LD₁ ····· LDN    LD(N+1) ···· LDM    PD₁ ···· PDN    PD(N+1) ··· PDM

| G₁ 1...N | G₂ (N+1)....M | G₃ 1...N | G₄ (N+1)....M |

MUX    DEMUX

F 12    F 12

# FIG 2

LD₁ ········    LDM  PD₁ ·······    PDM

G₁  G₂  G₃  G₄    G₁  G₂  G₃  G₄

F₁₂    F₃₄    F₁₂    F₃₄

MUX    F₁₄    F₁₄    DEMUX